# EUROPEAN PATENT APPLICATION

(11) **EP 2 871 848 A1**
(43) Date of publication of application: **13.05.2015**
(21) Application number: 13192400.3
(22) Date of filing: 12.11.2013
(51) Int. Cl.: H04N 21/242, H04N 21/43, H04N 21/6332, H04N 21/637, H04N 21/6437

(54) **Providing correction information for media synchronization**

(71) Applicant: Koninklijke KPN N.V., 2516 CK The Hague (NL); Nederlandse Organisatie voor toegepast- natuurwetenschappelijk onderzoek TNO, 2595 DA 's-Gravenhage (NL)
(72) Inventor: Stokking, Hans Maarten, 2292 CH Wateringen (NL); Koenen, Robert, 3071 AW Rotterdam (NL)
(74) Representative: Wuyts, Koenraad Maria

(57) **Abstract**

A system is provided for enable adjusting a level of synchrony between a processing of a media stream and a reference processing. Here, the processing of the media stream and the reference processing is associated with a target level of synchrony. The system comprises an input for obtaining synchronization information indicative of the level of synchrony between the processing of the media stream and the reference processing, and a processor configured for determining a time adjustment to be applied to the processing of the media stream so as to pre-compensate for a drift between the processing of the media stream and the reference processing which will cause a deviation from the target level of synchrony over time. As such, an adjusted level of synchrony may be established which provides leeway for the drift so that, instead of the drift immediately causing an increase in the deviation between the processing of the media stream and the reference processing, the drift may now initially cause a decrease rather than an increase in said deviation.

## Description

### FIELD OF THE INVENTION

The invention relates to a system and method for providing correction information to enable adjusting a level of synchrony between a processing of a media stream and a reference processing. The invention further relates to a media distribution network, a synchronization server and a synchronization client comprising the system. The invention further relates to a computer program product comprising instructions for causing a processor system to perform the method.

### BACKGROUND ART

Media content such as video content and audio content is commonly delivered to users in a digital form. If media content has a temporal aspect, and in particular is associated with a timeline which indicates how the media content is to be played out or otherwise processed over time, such digital form is typically referred to as a media stream. Examples of media streams include video streams such as camera-recorded or computer-rendered streams, audio streams such as microphone-recorded streams, timed text streams such as subtitle streams or social-media streams, timed events streams which show an advertisement image or perform an action at a receiver, and multimedia streams comprising different types of media streams.

Different media streams may be associated with a common timeline in that there may be a temporal relationship between the media streams. In particular, different media streams may be meant to be processed in a synchronized manner. Such processing may include, e.g., synchronized play-out, synchronized multiplexing and synchronized recording. For example, when a first media stream constitutes a video recording of an event and a second media stream constitutes an audio recording of the same event, it may be desirable to record, multiplex and/or play-out the first media stream and the second media stream in a synchronized manner so as to maintain or reproduce the temporal relationship between both media streams.

To achieve the above synchronized processing of different media streams, so-termed *inter-stream synchronization* techniques may be used, as known per se from the field of media synchronization. Such synchronization may also be desirable in case a same, similar or different media stream is processed at different destinations, e.g., across different receivers. To achieve such synchronization across different destinations, so-termed *inter-destination synchronization* techniques may be used.

It may also be desirable to synchronize the processing of a media stream to clock information which is indicative of a reference timing of the processing of the media stream. Such clock information may be obtained from the media stream itself or from another source, e.g., the source of the media stream. To achieve such synchronization, so-termed *intra-stream synchronization* techniques may be used.

The abovementioned and related synchronization use-cases and techniques are henceforth referred to in short as media synchronization. In particular, the term media synchronization is understood as referring to the synchronizing of a processing of a media stream to a reference processing, with the reference processing being constituted by one of the group of: a further processing of the media stream (as in inter-destination synchronization), the processing of a further media stream (as in inter-stream synchronization), and clock information indicating a reference timing of the processing of the media stream (as in intra-stream synchronization).

For example, inter-destination media synchronization may involve carrying out a synchronization between play-out of content at different destinations. Here, the play-out at one destination may constitute a reference for the play-out at another destination. With inter-stream synchronization, the play-out of one media stream, e.g. a video stream, may constitute a reference for the play-out of another media stream, e.g. an audio stream, or vice versa, e.g., to achieve lip synchronization. With intra-stream synchronization, the original timing of a recording, e.g., 25 frames per second or 44 kHz audio, may constitute a reference for the play-out of a media stream in time. With event-based synchronization, an original timing of an event, e.g., the timing of questions to an audience in a play-along quiz show, may constitute a reference for an actual presentation of such events during the broadcast of such a quiz show.

It is noted that media synchronization may be carried out to a level where the processing of a media stream is perfectly synchronized with a reference processing, or it may at least be intended to carry out the synchronization to said level. However, it may also be desired to perform synchronization to a level other than said perfect synchronization. For example, if it is known that a video frame buffer causes a 25ms delay further onward in a media processing chain, it may be desirable to synchronize a video stream and an audio stream to the level of the video stream being ahead of the audio stream by 25ms. Accordingly, media synchronization may purposefully establish a predetermined time delay between the processing of a media stream and a reference processing, namely to establish a target level of synchrony.

It may be needed to periodically synchronize the processing of a media stream to a reference processing to avoid losing the target level of synchrony. A reason for this is that there may be a structural asynchrony between the processing of the media stream and the reference processing. Here, the term 'structural asynchrony' refers to the processing of the media stream and the reference processing losing synchrony due to a structural cause. An example of such a structural cause is each processing being based on a slightly different clock rate. Another example is so-termed media repurposing which may result in a first media stream having a slightly different length than a second media stream despite both media streams being associated with a common timeline. Asynchrony may also have a temporary, i.e., non-structural cause, such as fluctuating network circumstances, fluctuating processing capabilities, etc.

Accordingly, even if the processing of the media stream has been previously synchronized to establish a target level of synchrony with the reference processing, deviations from the target level of synchrony may occur over time. Accordingly, it may be needed to periodically (re)synchronize said processing, e.g., at fixed time intervals or in response to a measured deviation.

An article titled *"*Design and Simulation of a Distributed Control Scheme for Inter-Destination Media Synchronization" by M. Montagud, F. Boronat and H. Stokking, AINA-2013, Barcelona, 2013 March 25-28, describes a Distributed Control Scheme (DCS) for Inter-Destination Multimedia Synchronization. In this scheme, geographically dispersed receivers exchange Real-time Transport Protocol Control (RTPC) reports on their arrival and play-out timing for Real-time Transport Protocol (RTP) packets, and each one of them uses the collected reports from the other receivers belonging to the same logical group (or cluster) to adaptively adjust its local play-out timing such that an overall synchronization status (within allowable limits) is maintained.

The DCS scheme employs a *"sync to the slowest receiver*" policy to synchronize all receivers to the same rate, namely that of the slowest receiver.

### SUMMARY OF THE INVENTION

Disadvantageously, when using a scheme such as the above DCS scheme for media synchronization, frequent synchronization may enable deviations from the target level of synchrony to be minimized but may require frequent calculations to be performed, frequent signaling to be carried out, etc. Conversely, infrequent synchronization may result in large deviations from the target level of synchrony.

It would be advantageous to obtain a system or method which improves on at least one disadvantage of said media synchronization.

A first aspect of the invention may provide a system for providing correction information to enable adjusting a level of synchrony between a processing of a media stream and a reference processing, the processing of the media stream and the reference processing being associated with a target level of synchrony, wherein the system may comprise:
- an input for obtaining synchronization information indicative of the level of synchrony between the processing of the media stream and the reference processing;
- a processor configured for providing correction information indicating a time adjustment to be applied to the processing of the media stream to establish an adjusted level of synchrony between the processing of the media stream and the reference processing;
- wherein the processor may be configured for determining the time adjustment to pre-compensate for a drift between the processing of the media stream and the reference processing which may cause a deviation from the target level of synchrony over time.

A further aspect of the invention may provide a media distribution network, a synchronization server or a synchronization client comprising the system.

A further aspect of the invention may provide a method for providing correction information to enable adjusting a level of synchrony between a processing of a media stream and a reference processing, the processing of the media stream and the reference processing being associated with a target level of synchrony, wherein the method may comprise:
- obtaining synchronization information indicative of the level of synchrony between the processing of the media stream and the reference processing;
- providing correction information indicating a time adjustment to be applied to the processing of the media stream to establish an adjusted level of synchrony between the processing of the media stream and the reference processing;
- wherein the providing of the correction information may comprise determining the time adjustment to pre-compensate for a drift between the processing of the media stream and the reference processing which may cause a deviation from the target level of synchrony over time.

A further aspect of the invention may provide a computer program product comprising instructions for causing a processor system to perform the method.

Embodiments are defined in the dependent claims.

The above measures provide a system which may comprise an input for obtaining synchronization information indicative of a level of synchrony between the processing of the media stream and the reference processing. As such, the system may be provided with information which may be indicative of whether the processing of the media stream and the reference processing is in synchrony or asynchrony, and in case of the latter, a degree of the asynchrony. Such degree may be expressed in, e.g., milliseconds, number of samples or any other suitable quantity. It is noted that it is known per se to obtain such synchronization information, as described in, e.g., the article *"*Multimedia group and inter-stream synchronization techniques: A comparative study" by F. Boronat et al., Elsevier Information Systems, 34, 2009, pp. 108-131. For example, such synchronization information may be obtained on the basis of content timestamps comprised in one or more media stream or by matching fingerprints, watermarks or other persistent markers from respective media streams.

In this respect, it is noted that the synchronization information may be indicative of the level of synchrony in that it may reflect a recent measurement or estimate of the level of synchrony by the entity or entities processing the media stream and/or by the entity or entities performing or otherwise establishing the reference processing. Therefore, at a time of receiving the synchronization information, the actual level of synchrony may differ from that as indicated by the synchronization information. However, such differences are typically small, particularly if the synchronization information is obtained via a low latency communication pathway. Also, the synchronization information may indicate a time of the measurement or estimate.

The system may further comprise a processor which may be configured for providing correction information indicating a time adjustment to be applied to the processing of the media stream. Such a time adjustment may be applied by delaying or advancing the processing of the media stream, e.g., by changing the rate of processing or by skipping ahead or back. For example, if the processing of the media stream is running behind the reference processing, synchronization may be obtained by the processing of the media stream skipping ahead or temporarily running at a faster rate. Accordingly, by providing the correction information, the time adjustment may be applied to the processing of the media stream, thereby establishing an adjusted level of synchrony. It is noted that in the field of media synchronization, such time adjustments are typically applied by synchronization clients. Such a synchronization client may, but may not need to be, part of the device(s) processing the media stream. Such a synchronization client may also be part of a network node which is in the path of the media stream when the media stream is distributed across a media distribution network, and/or may be comprised in a media stream source of the media stream.

The inventors have recognized that if there may be structural or even non-structural causes of asynchrony, the processing of the media stream may drift from the reference processing. Here, the term 'drift' refers to a gradual change in the synchrony which ultimately results in a gradual increase in the deviation between the processing of the media stream and the reference processing. For example, if the processing of the media stream is based on a slower clock rate than the reference processing, the processing of the media stream may continuously run slower than the reference processing. In addition, the inventors have recognized that the synchronization may be associated with a range of acceptable synchronization levels. For example, in so-termed lip synchronization, even though the target level of synchrony between the play-out of a video stream and the play-out of an audio stream is ideally 0ms, an asynchrony between approximately -125ms to + 45ms is acceptable since an asynchrony within this range is typically not detectable by viewers. Accordingly, the inventors have recognized that when determining a time adjustment, it may not be needed to directly establish the target level of synchrony, but rather that any value within such a range of acceptable synchronization levels may in principle suffice.

In view of the above, the processor may be configured for determining the time adjustment which is to be applied to the processing of the media stream to provide for a pre-compensation for a drift between the processing of the media stream and the reference processing. Effectively, the time adjustment may be determined to establish an adjusted level of synchrony which provides a certain amount of leeway for the future drift so that, instead of the drift immediately causing an increase again in the deviation between the processing of the media stream and the reference processing, the drift may now initially cause a decrease rather than an increase in said deviation, namely by causing a gradual change from the adjusted level of synchrony to the target level of synchrony. As such, instead of directly establishing the target level of synchrony, the processor may rather determine the time adjustment to establish a different level of synchrony, i.e., one which is not equal to the target level of synchrony, namely one which provides said lee-way for the drift and, when established within the range of acceptable synchrony levels, may still deemed to be acceptable.

As an example, asynchrony in lip sync may be (virtually) undetectable when the audio is up to 125 ms behind the video (referred to as -125 ms) or up to 45 ms in front of the video (referred to as +45 ms) during play-out. If the drift is towards the negative, i.e. audio is played-out slower than the video, the level of asynchrony may be adjusted to +45ms instead of being directly adjusted to 0ms. This may provide the audio with a head start which establishes said lee-way for future drift.

An advantage of the above may be that the processing of the media stream and the reference processing may need to be less frequently synchronized while still maintaining, on average, a same deviation from the target level of synchrony. Less frequent synchronization may require fewer calculations to be performed, fewer signaling to be carried out, etc. The inventors have recognized that such calculations and signaling may not constitute a significant burden when determining the time adjustment for the processing of one media stream, e.g., for a single synchronization client, however said burden may significantly increase when the media synchronization is employed within a client-server model where a plurality of synchronization clients interact with a synchronization server. Less frequent synchronization also increases the likelihood that a silent interval occurs in which a synchronization action can be advantageously performed before a synchronization action is required, e.g. a silent period in an audio stream where the audio stream can be synchronized without being detectable, or a period in a video stream where the displayed scene is static and can be even abruptly synchronized without being noticeable for a user. A further advantage may be that, given a same synchronization frequency, i.e., a same number of synchronization actions, an on average smaller deviation from the target level of synchrony may be obtained. Moreover, when the adjusted level of synchrony is kept within a range of acceptable synchrony levels, there may not be any significant effect on synchronization quality, i.e., it may still be perceived by a user or other entity as being synchronized.

In an embodiment, the reference processing may be constituted by one of the group of: a further processing of the media stream, the processing of a further media stream, and clock information representing a reference timing for the processing of the media stream. Accordingly, the system may be configured for providing correction information to enable adjusting a level of synchrony between the processing of a media stream and a further processing of the media stream, between the processing of a media stream and the processing of a further media stream, and/or between the processing of a media stream and clock information representing a reference timing for the processing of the media stream. Here, the term 'further processing of the media stream' refers to another processing taking place of substantially the same media stream, as may be the case during inter-destination synchronization. In addition, the term 'processing of a further media stream' refers to a processing taking place of another media stream, as may be the case during inter-stream synchronization as well as inter-destination synchronization. Finally, the term 'clock information representing a reference timing' refers to a reference processing which is represented, and may in fact be prescribed, by clock information, as may be the case during intra-stream synchronization. It is noted that in this case, the reference processing may not actually take place but may rather be represented by the clock information as it provides a reference timing for the processing of the media stream.

In an embodiment, the processor may be configured for pre-compensating for the drift by determining the time adjustment to exceed the minimal time adjustment needed to obtain the target level of synchrony. The inventors have recognized that drift may frequently be a cause for the reported level of synchrony being different from the target level of synchrony. Accordingly, by determining the time adjustment to exceed the minimal time adjustment needed to obtain the target level of synchrony, a pre-compensation for the drift may automatically be obtained. Effectively, the time adjustment may be established to overshoot the target level of synchrony. As a practical example, if the target level of synchrony is 0ms and the reported level of synchrony is 100ms, the time adjustment may be determined to be -220ms, thereby obtaining an adjusted level of synchrony of -120ms. The target level of synchrony may thus deliberately be overshot by, in this example, 120ms. It is noted that such overshooting may yield an adjusted level of synchrony which remains in a range of acceptable synchrony levels or in a range of detectable synchrony levels.

In an embodiment, the processor may be configured for:
- estimating a direction and/or magnitude of the drift based on the synchronization information, thereby establishing a drift estimate; and
- determining the time adjustment based on the drift estimate.

By estimating a direction and/or magnitude of the drift, one or more parameters defining the drift may be estimated and thus made explicit for use in determining the time adjustment. By estimating the direction of the drift, the processor may be enabled to determine in which direction to pre-compensate for the drift. By estimating the magnitude for the drift, the processor may be enabled to determine how much pre-compensation is needed. An advantage of this embodiment may be that the processor is able to more accurately determine a suitable time adjustment.

In an embodiment, the synchronization information may further be indicative of an earlier level of synchrony between the processing of the media stream and the reference processing, and the processor may be configured for establishing the drift estimate based on a difference between the level of synchrony and the earlier level of synchrony. Here, the term 'earlier level of synchrony' refers to a level of synchrony which was estimated, measured or otherwise determined at an earlier moment in time than the first-mentioned level of synchrony. Accordingly, the processor may obtain the levels of synchrony at at least two different moments in time. By comparing both levels of synchrony, the processor may be enabled to efficiently estimate the drift. In this respect, it is noted that drift may have been determined in the past and stored for later use. Such later use may then be under the assumption that devices may suffer from similar drift at different moments in time, or that different media streams may suffer from similar drift at a single moment in time. Accordingly, a previously estimated or measured level of drift may serve as an estimate for the current level of drift.

In an embodiment, the processor may be configured for establishing the drift estimate by fitting a function to data points comprising the level of synchrony and the earlier level of synchrony. Fitting a function may allow the processor to efficiently estimate the drift. For example, a linear function may be fitted to the data points to obtain a linear estimate of the drift. Also, if more than two data points are available, a non-linear function may be fitted to the data points to obtain a non-linear estimate.

In an embodiment, the synchronization information may be constituted by periodic reports of a current level of synchrony between the processing of the media stream and the reference processing. By obtaining periodic reports on the current level of synchrony, the system may automatically obtain the levels of synchrony at different moments in time. Such reports may be constituted by, e.g., a synchronized reporting or otherwise matching-in-time of content timestamps as encountered during the processing of the media streams. In particular, such periodic reports may be constituted at least in part by information reported by a synchronization client.

In an embodiment, the processing of the media stream and the reference processing may be associated with a range of acceptable synchrony levels, wherein the range may comprise the target level of synchrony as an intermediate point, thereby dividing the range into two sub-ranges, and wherein the processor may be configured for establishing the adjusted level of synchrony in another one of the two sub-ranges than the one of the two sub-ranges which comprises the level of synchrony. The processing of the media stream and the reference processing may be associated with a range of acceptable synchrony levels in that said processing may be considered to be synchronous to an acceptable level if the level of synchrony remains within said range. For example, in so-termed lip synchronization, an asynchrony between approximately -125ms to + 45ms is acceptable since an asynchrony within this range is typically not detectable by viewers. Similarly, in inter-destination synchronization, differences of about 1 second between the play-out at different destinations may not be noticeable to most users. Accordingly, here, the range of acceptable synchrony levels may be approximately -1s to +1s. The target level of synchrony may be an intermediate point within the range of acceptable synchrony levels in that it is comprised within the range. The target level of synchrony may therefore divide the range into two sub-ranges which may or may not be of equal size. For example, in lip synchronization, the target level of synchrony may be 0ms, thereby yielding a sub-range from -125ms to 0ms and a second sub-range from 0ms to 45ms. The level of synchrony may be comprised in one of the two sub-ranges. By determining the time adjustment so as to establish the adjusted level of synchrony in the other, i.e., the opposite sub-range, the processor may take into account that the reported level of synchrony is comprised in that particular sub-range due to the drift and that thus a suitable pre-compensation for the drift may be achieved by establishing the adjusted level of synchrony in the opposite sub-range. This embodiment may have the advantage that it is not needed to explicitly estimate the (direction of the) drift. Rather, it may be sufficient for the processor to determine in which sub-range the reported level of synchrony is comprised. In this respect, it is noted that it may not even be needed for the processor to explicitly determine or have information defining the sub-range. Rather, when assuming that a range of acceptable synchrony levels exists, it may be sufficient for the processor to determine at which side of the target level of synchrony the reported level of synchrony is comprised to be able to pre-compensate for the drift, namely by generating the adjusted level of synchrony to be comprised at the other side. If the value is suitably determined, the processor may as such automatically establish the adjusted level of synchrony in the opposite sub-range.

In an embodiment, the processor may be configured for periodically providing the correction information so as to periodically compensate for the drift between the processing of the media stream and the reference processing. By periodically providing the correction information, it may be avoided that the level of synchrony drifts too much from the target level, thereby limiting the asynchrony.

In an embodiment, the processor may be configured for periodically providing the correction information to maintain the level of synchrony within a range of acceptable synchrony levels. By maintaining the level of synchrony within the range of acceptable synchrony levels, it may be avoided that the asynchrony becomes unacceptable, e.g., detectable to a distracting degree, to a user.

In an embodiment, the processor may be configured for periodically providing the correction information to allow a variation in the level of synchrony across the range of acceptable synchrony levels. For example, the processor may only provide the correction information when the level of synchrony appears to exceed one end of the range of acceptable synchrony levels. The frequency of providing the synchrony information may then be reduced by substantially maximally pre-compensating for the drift, i.e., by establishing the adjusted level of synchrony at the opposite end of the range. Accordingly, correction information needs to be provided less frequently, i.e., fewer synchronization actions are needed, compared to the case where the level of synchrony is adjusted to directly equal the target level of synchrony.

In an embodiment, the processing may be one of the group of: a play-out, a multiplexing and a recording. As such, the system may enable adjusting a level of synchrony between a play-out of a media stream and a reference play-out in that the system may enable a certain level of synchrony to be maintained between said play-outs. Similarly, the system may enable adjusting the level of synchrony between the multiplexing of a media stream and a reference multiplexing, e.g., that of another media stream, or between the recording of a media stream and a reference recording.

It will be appreciated by those skilled in the art that two or more of the above-mentioned embodiments, implementations, and/or aspects of the invention may be combined in any way deemed useful.

Modifications and variations of the method and/or the computer program product, which correspond to the described modifications and variations of the system, can be carried out by a person skilled in the art on the basis of the present description.

The invention is defined in the independent claims. Advantageous yet optional embodiments are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a system for providing correction information to one or more synchronization clients to enable the synchronization client(s) to adjust a level of synchrony between a processing of a media stream and a reference processing;
Fig. 2 shows a prior art manner of adjusting the level of synchrony;
Fig. 3 shows an example of the adjusting of the level of synchrony in accordance with the present invention, in which the frequency of providing of the correction information is minimized by allowing a variation in the level of synchrony;
Fig. 4 shows another example of the adjusting of the level of synchrony, in which a variation is obtained which averages out to a target level of synchrony;
Fig. 5 shows a further example of the adjusting of the level of synchrony, in which the adjusted level of synchrony is established opposite to the current level of synchrony in a range of acceptable synchrony levels;
Fig. 6 shows an intermediate adjusting of the level of synchrony;
Fig. 7 shows a method in accordance with the present invention; and
Fig. 8 shows a computer program product comprising instructions for causing a processor system to perform the method.

It should be noted that items which have the same reference numbers in different

Figures, have the same structural features and the same functions, or are the same signals. Where the function and/or structure of such an item has been explained, there is no necessity for repeated explanation thereof in the detailed description.

### DETAILED DESCRIPTION OF EMBODIMENTS

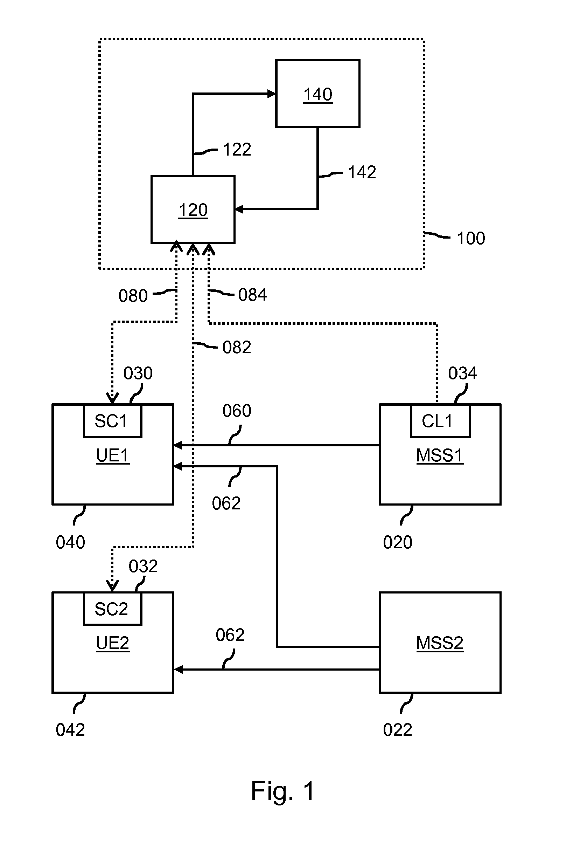

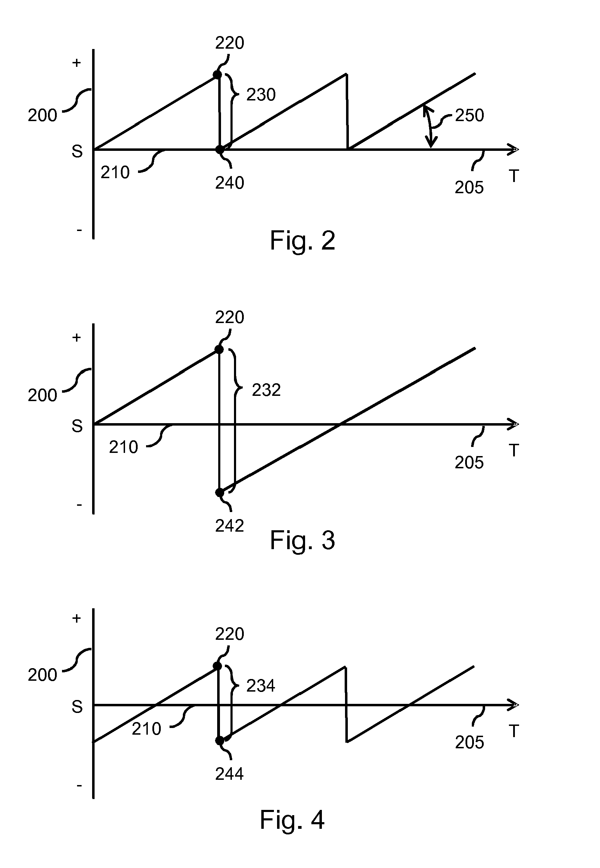

Fig. 1 shows a system 100 for providing correction information to enable adjusting a level of synchrony between a processing of a media stream and a reference processing. Here, the processing of the media stream and the reference processing are associated with a target level of synchrony, as will also be explained with reference to Fig. 2 and further. The system 100 comprises an input/output 120 for obtaining synchronization information 122 indicative of the level of synchrony between the processing of the media stream and the reference processing. In addition, the system 100 comprises a processor 140 which is configured for providing correction information 142 indicating a time adjustment to be applied to the processing of the media stream to establish an adjusted level of synchrony between the processing of the media stream and the reference processing. In accordance with the invention, the processor 140 may be configured for determining the time adjustment to pre-compensate for a drift between the processing of the media stream and the reference processing which will cause a deviation from the target level of synchrony over time.

In addition to the system 100, Fig. 1 further serves to illustrate various use-cases in which the system 100 may be employed. In particular, Fig. 1 shows a first media stream source (MSS) 020 and a second media stream source 022. The first media stream source 020 and the second media stream source 022 may be part of a media distribution network, and may be arranged for streaming or otherwise providing media streams to media stream processing devices, such as, e.g., servers, multiplexers, recording devices, play-out devices etc. Said devices may comprise, but are not limited to, user equipment (UE), such as TVs, DVB players and recorders, mobile phones, cameras, (digital) radio's, music (mp3) players, PCs, laptops, tablets, smartphones, set-top boxes, media players, car hifi installations, professional audio and video equipment, etc. Such media stream processing devices are henceforth simply referred to as 'processing devices'. In this respect, it is noted that such processing as performed by the processing devices may include play-out, multiplexing, recording, etc, of a respective media stream. Fig. 1 shows the first media stream source 020 providing a first media stream 060 to a first processing device 040 and the second media stream source 022 providing a second media stream 062 to a second processing device 042 and to the first processing device 040. The media stream sources 020, 022 and processing devices 040, 042 as shown serve to illustrate three use-cases, namely:
A) Inter-stream synchronization, namely by way of the system 100 providing the correction information to the first processing device 040 for enabling adjusting the level of synchrony between the processing of the first media stream 060 and the processing of the second media stream 062 by the first processing device 040;
B) Inter-destination synchronization, namely by way of the system 100 providing the correction information to the first processing device 040 and/or to the second processing device 042 to enable adjusting the level of synchrony between the processing of the first media stream 060 by the first processing device 040 and the processing of the second media stream 062 by the second processing device 042;
C) Intra-stream synchronization, namely by way of the system 100 providing the correction information to the first processing device 040 to enable adjusting the level of synchrony between the processing of the first media stream 060 and a reference processing as represented by clock information;

In the above, the correction information 142 may be provided to the processing device(s) 040, 042 via the input/output 120, e.g., based on an exchange of messages 080, 082. Alternatively or additionally to providing the correction information 142 to the processing device itself, the correction information 142 may also be provided to a synchronization client which is tasked with applying a time adjustment to the processing of a media stream and which may be comprised in a respective processing device but may also be comprised outside of said device. It is noted that such synchronization clients are known per se from the field of media synchronization. In accordance with the above, Fig. 1 shows the system 100 functioning as a synchronization server, in that the processing devices 040, 042 are shown to each comprise a synchronization client (SC) 030, 032 which are in communication with the system 100 via an exchange of messages 080, 082, and which may be used to apply a time adjustment to the processing of the respective media streams 060, 062. The time adjustment may be applied by delaying or advancing the processing of the media stream, e.g., by changing the rate of processing or by skipping ahead or back.

In addition, the synchronization clients 030, 032 may individually or jointly provide synchronization information which is indicative of the level of synchrony between the processing of the first media stream 060 and a reference processing. As such, in addition to carrying out the synchronization, e.g., by means of buffering, the synchronization clients 030, 032 may report on the current (a)synchrony. For example, the synchronization clients may report on a current play-out timing by periodically reporting on a wall clock time in conjunction with a content timestamp, e.g., *"at wall clock 12:30:00 played out content 01:15:00"* (in hh:mm:ss). Such periodic reports may together constitute synchronization information which is indicative of the level of synchrony between the processing of the media stream and the reference processing.

A synchronization client reporting on the current level of synchrony is also referred to as a Measuring Synchronization Client (MSC), whereas a synchronization client carrying out the synchronization is also referred to as Buffering Synchronization Client (BSC). Both functions may be carried out by a single synchronization client. Alternatively, both functions may be distributed over several entities.

It is noted that in the case of intra-stream synchronization, the synchronization information may be constituted in part by clock information 084, e.g., from a reference clock 034. It is noted that the obtaining of such synchronization information and the subsequent applying of a time adjustment to the processing of a media stream are both known per se from the field of media synchronization. The present invention is therefore not limited to the above examples.

It is noted that in the above, the reference processing may, depending on the use-case, be constituted by the processing of the second media stream 062 by the first processing device 040 (i.e., inter-stream synchronization), the processing of the second media stream 062 by the second processing device 042 (i.e., inter-destination synchronization) or be represented by the clock information 084 providing a reference timing for the processing of the first media stream 060. Accordingly, during operation of the system 100, the system 100 may obtain the synchronization information 122 from, and provide the correction information 142 to, the synchronization clients 030, 032 via the aforementioned exchange of messages 080, 082. In addition, in case of inter-destination synchronization, the system 100 may obtain the clock information 084 from the reference clock 034, as comprised in, e.g., the first media stream source 020. Alternatively, the processing device 040 may supply the clock information 084.

It is further noted that the examples in this application follow the so-termed synchronization maestro scheme (SMS, a client-server model). However, the invention is also applicable to other synchronization schemes such as a distributed control scheme (DCS) or a master-slave scheme, as discussed in the earlier mentioned article *"*Multimedia group and inter-stream synchronization techniques: A comparative study" by F. Boronat et al., Elsevier Information Systems, 34, 2009, pp. 108-131.

An operation of the system 100 may be briefly explained as follows. The input/output 120 may obtain the synchronization information 122. The processor 140 may determine the time adjustment to pre-compensate for the drift between the processing of the media stream and the reference processing which will cause the deviation from the target level of synchrony over time. The processor 140 may provide the time adjustment in the form of correction information 142 which is to be applied to the processing of the media stream to establish the adjusted level of synchrony between the processing of the media stream and the reference processing.

Fig. 2 shows a prior art manner of adjusting the level of synchrony. Here, and in Figs. 3 to 6, the horizontal axis 205 represents a time axis while the vertical axis 200 indicates the level of synchrony between the processing of the media stream and the reference processing. Further shown is a target level of synchrony 210, which may be, e.g., 0ms but may equally have another predetermined value. The difference between a current level of synchrony 220 and the target level of synchrony 210 may be referred to as the level of asynchrony, or in short, the asynchrony. In the prior art manner of adjusting the level of synchrony, a reported level of synchrony 220 may be used as basis for determining a time adjustment 230 needed to obtain the target level of synchrony 210. Accordingly, correction information may be calculated which, when applied to the processing of the media stream, yields an adjusted level of synchrony 240 which is shown in Fig. 1 to approximate the target level of synchrony.

Fig. 2 further illustrates a result of drift 250 occurring between the processing of the media stream and the reference processing, in that, after adjustment, the level of synchrony gradually deviates again from the target level of synchrony 210. In accordance with the prior art manner of adjusting the level of synchrony, the above synchronization action may be repeated in a similar manner over time, each time adjusting a current level of synchrony to that of the target level of synchrony 210. It is noted that such adjustments may be abrupt, e.g., as in the case of skipping or pausing a play-out of a media stream, or gradual, e.g., by speeding up or slowing down the play-out of the media stream until the target level of synchrony has been reached.

Fig. 3 shows an example of the adjusting of the level of synchrony in accordance with an embodiment of the invention. Here, a result is shown of the processor being configured for determining the time adjustment 232 to pre-compensate for the drift between the processing of the media stream and the reference processing. In particular, Fig. 3 shows the time adjustment 232 exceeding the minimal time adjustment needed to obtain the target level of synchrony. As a result, an adjusted level of synchrony 242 is obtained which effectively 'overshoots' the target level of synchrony 210. Accordingly, even though the level of synchrony gradually deviates again from the adjusted level of synchrony 242 after adjustment, the deviation is initially *towards* the target level of synchrony 210, i.e., the asynchrony initially decreases, and only after reaching the target level of synchrony 210, the asynchrony increases again. When comparing Fig. 3 with the prior art manner of adjusting the level of synchrony as shown in Fig. 2, it can be seen that fewer synchronization actions are needed to maintain a same average absolute deviation from the target level of synchrony 210.

Fig. 4 shows another example of the adjusting of the level of synchrony in accordance with an embodiment of the invention. Here, a same frequency of synchronization actions is employed as in the prior art manner shown in Fig. 2. Again, the time adjustment 234 is shown to pre-compensate for the drift between the processing of the media stream and the reference processing by exceeding the minimal time adjustment needed to obtain the target level of synchrony 210. As a result, an adjusted level of synchrony 244 is obtained which overshoots the target level of synchrony 210. It can be seen that although a same frequency of synchronization actions and a same size of time adjustment is used as in Fig. 2, the average absolute deviation from the target level of synchrony 210 is reduced compared to Fig. 2, yielding a more accurate synchronization. It will be appreciated that the embodiment of which the result is shown in Fig. 4 may be modified to obtain a lower frequency of synchronization, namely by providing a larger time adjustment compared to the depicted time adjustment, while at the same time ensuring that the current level of synchrony and the adjusted level of synchrony remain within a range of acceptable synchrony levels such as those shown in Fig. 3. Hence, a combination of fewer synchronization actions and a more accurate synchronization may be obtained.

It will be appreciated, that instead of the system taking into account a range of acceptable synchrony levels, the system may keep the current level of synchrony and/or the adjusted level of synchrony within a target range which is based on criteria other than the aforementioned acceptability or detectability by end-users. For example, a target range may be selected for technical reasons, for fairness between users, for dependencies with other systems, or as a compromise between various criteria.

It will be appreciated that the time adjustment as shown in Fig. 3 and Fig. 4 may be calculated in various ways. For example, the processor may explicitly estimate a direction and/or magnitude of the drift, e.g., based on the synchronization information, and thereby establish a drift estimate. Accordingly, the processor may determine the time adjustment to pre-compensate for the drift estimate. Such a drift estimate may be based on multiple data points. For example, the synchronization information may be indicative of an earlier level of synchrony between the processing of the media stream and the reference processing, as may be the case when the synchronization information constitutes a periodic reporting of the current level of synchrony. The processor may then establish the drift estimate based on a difference between the level of synchrony and the earlier level of synchrony. In particular, the estimating of the drift may comprise fitting a function to data points comprising the level of synchrony and the earlier level of synchrony, such as a linear or non-linear function.

Alternatively, when assuming that the reported level of synchrony is caused by the drift, the processor may simply determine the time adjustment to yield a value on 'the other side' of the target level of synchrony 210, e.g., by adding or subtracting an offset, determining the time adjustment to yield a level of asynchrony which is inverted in sign, i.e., has a negative value instead of a positive value or vice versa, etc.

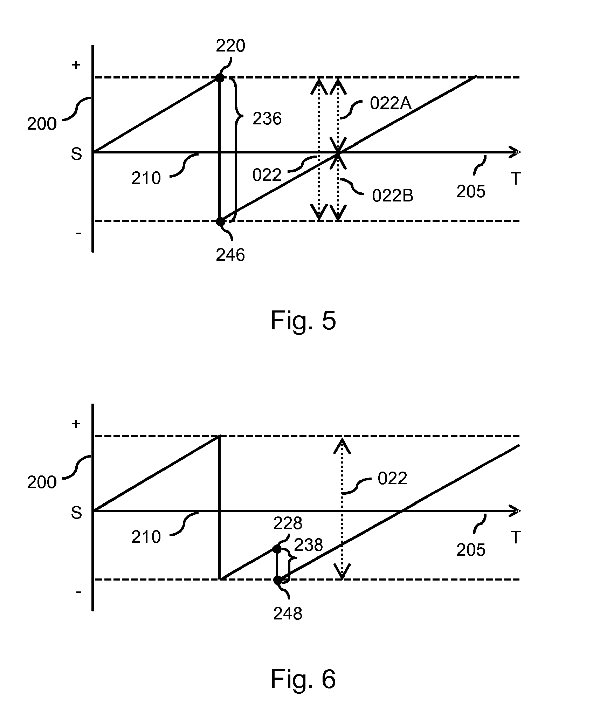

In general, as in the prior art manner of adjusting the level of synchrony, the processor may be configured for periodically providing the correction information so as to periodically compensate for the drift between the processing of the media stream and the reference processing. In doing so, the level of synchrony may be adjusted while taking into account a range of acceptable synchrony levels. Fig. 5 shows an example of this, in that it shows the adjusted level of synchrony being established opposite to the current level of synchrony in a range of acceptable synchrony levels. The range 022 shown in Fig. 5 may correspond to a range in which inter-stream synchronization is still considered to be acceptable. For example, the range may be a so-termed lip synchronization acceptability range which is known per se from the field of media synchronization. The range may also be a range in which inter-destination synchronization is still considered to be acceptable, etc. Fig. 5 shows the target level of synchrony 210 dividing the range 022 into two sub-ranges, namely a first sub-range 022A and a second sub-range 022B. The first sub-range 022A is shown to comprise the reported level of synchrony 220. Fig. 5 further shows the time adjustment 236 yielding an adjusted level of synchrony 246 which lies in the second, i.e., opposite sub-range 022B. When the range 022 is explicitly available to the system, e.g., in the form of thresholds or other data, the processor may deliberately determine the time adjustment 236 to maximally pre-compensate for the drift while still maintaining a level of acceptable synchrony. Accordingly, the processor may establish an adjusted level of synchrony 246 which is located approximately at an opposite end of the range 022 and thus at an end of the second, i.e., opposite, sub-range 022B. It is noted that, alternatively, the processor may determine the time adjustment to any other suitable value within the opposite sub-range 022B, e.g., by establishing the adjusted level of synchrony as a midpoint (halfway point) of the sub-range 022B, or by obtaining any other compromise between the acceptability of the adjusted level of synchrony and the degree of pre-compensation. It is noted that even if such range 022 is not explicitly available to the system, the processor may nevertheless establish an adjusted level of synchrony which falls within said range 022, e.g., by limiting the size of the adjustment.

It will be appreciated that the processor may periodically provide the correction information, i.e., as part of a synchronization action. For example, the correction information may be provided as a response to the (periodic) obtaining of new synchronization information. This may allow maintaining the level of synchrony within such a range of acceptable synchrony levels. Moreover, as shown in Fig. 5, the synchronization actions may be timed such that a variation in the level of synchrony is obtained which substantially covers the entire range 022 of acceptable synchrony levels. This may be done by the processor effecting the synchronization action so that when the current level of synchrony nears one end of the range 022, the adjusted level of synchrony 246 is established at the other, i.e., opposite end of the range 022. Accordingly, the frequency of such synchronization actions may be minimized while still maintaining an acceptable level of synchrony.

Fig. 6 shows an intermediate adjusting of the level of synchrony. Here, the processor is shown to provide correction information as part of a synchronization action which causes an adjusted level of synchrony 248 to be established which deviates more from the target level of synchrony 210 than the reported level of synchrony 220. Even though this increases the level asynchrony, such an adjusted level of synchrony 248 may still be considered to be acceptable since it may be established within the range 022 of acceptable synchrony levels. Effectively, the synchronization action shown in Fig. 6 re-maximizes the degree of pre-compensation for the drift. Such synchronization action may take place, e.g., when a further entity is included in the media synchronization, as a randomly timed event, as a response to or under the assumption of a message carrying correction information having been lost, etc. Such a synchronization action may also be deliberate, e.g., to take advantage of a silent interval in which a synchronization action can be performed to create extra pre-compensation for drift without the synchronization action being noticeable for a user, e.g. during a silent period in an audio stream where the audio stream may be synchronized without being detectable, or a period in a video stream where the displayed scene is static and may be even abruptly synchronized without being noticeable for a user, or a commercial break where a synchronization action may be less disturbing to a user etc.

It will be appreciated that in general, the time adjustment may be determined as follows. Here, the processing is a play-out of a media stream while noting that the processing may equally be any other type of processing, such as multiplexing and recording. A first processing device, or a first synchronization client associated with the first processing device, may provide the following three reports of the play-out timing of a media stream to a synchronization server:
1. at wall clock 12:30:00, played-out content 01:15:00
2. at wall clock 12:45:00, played-out content 01:29:29
3. at wall clock 13:00:00, played-out content 01:44:58

It can be seen that in this example, the wall clock itself is not used for play-out timing since the play-out is running behind the wall clock, i.e., it is slightly too slow. It is common for a wall clock not to be used for play-out timing, as in the case of buffer-oriented play-out schedulers, if the media stream itself comprises timing information (e.g., a Program Clock Reference in MPEG Transport Streams) or if an (presumed) accurate hardware clock (e.g., from an audio card) is used for play-out timing.

There may be various causes for the too slow play-out, i.e., the apparent drift with respect to the wall clock, such as, but not limited to, drift of the wall clock itself which may cause a reporting to be linked to the wall clock time 13:00 while the actual time may have been 12:59:58, or a drift at the media stream source which causes only 00:29:28 worth of content being provided in half an hour of actual time.

Furthermore, in accordance with an inter-destination synchronization example, a second processing device, or a second synchronization client associated with the second processing device, may provide the following three reports of the play-out timing of a media stream to the synchronization server:
1. at wall clock 12:30:00, played-out content 01:15:00
2. at wall clock 12:45:00, played-out content 01:30:00
3. at wall clock 13:00:00, played-out content 01:45:00

The range of acceptable synchrony levels associated with the play-out of both devices may be +/- 1s, in that if the asynchrony between the play-out exceeds 1s, said asynchrony is deemed to be unacceptable. In accordance with an embodiment of the present invention, correction information may be provided to enable the level of synchrony, i.e., in this case the level of inter-destination synchrony, to substantially remain within said range of acceptability. For that purpose, the system may be comprised in the synchronization server or otherwise communicate with the synchronization server. Accordingly, at the second report of both processing devices, no correction information needs to be provided since the range of +/-1s is reached but not yet exceeded. However, at the third report, a synchronization action may be necessary since the range of +/- 1s has been exceeded. In a prior art manner of adjusting the level of synchrony, the second processing device may be instructed to wait 2 seconds, i.e., by determining a time adjustment of 2 seconds and generating corresponding configuration instructions for the second processing device. As such, upon applying the time adjustment, the second processing device may be substantially in synchrony again with the first processing device. However, a further synchronization action may be required again after only 30 minutes. In accordance with the present invention, the second processing device may be instructed to wait 3 seconds rather than 2 seconds. Accordingly, the second processing device may now become the processing device which lags behind, albeit with the first processing device catching up after 15 minutes and from then on becoming the slowest processing device again. Accordingly, rather than needing a further synchronization action after 30 minutes, the further synchronization action may now only need to be performed after 45 minutes.

It is noted that in the above, the second processing device may 'wait' in various ways. For example, the second processing device may temporarily pause play-out or continue play-out but at a slower than nominal rate, e.g., using so-termed adaptive media play-out as known per se from the field of media synchronization.

The above example concerns inter-destination synchronization. A similar example from the field of inter-stream synchronization is the following.

A processing device may suffer from a structural asynchrony in the play-out of an audio stream with a video stream. Such structural asynchrony may occur when video from a first source is combined with audio from a second source. The video may be provided as a MPEG Transport Stream (TS) which includes a Program Clock Reference (PCR). The processing device may use the PCR as a clock in timing the play-out of the video stream. The audio stream may have been timed by an internal clock from an audio rendering part, e.g., an audio card, of the processing device.

The play-out may be related to a wall clock as follows:
1. at wall clock 12:00:00, the play-out of the video stream is at 00:00:00.000 and the play-out of the audio stream is at 00:00:00.000
2. at wall clock 12:15:00, the play-out of the video stream is at 00:15:00.000 and the play-out of the audio stream is at 00:14:59.935
3. at wall clock 12:30:00, the play-out of the video stream is at 00:30:00.000 and the play-out of the audio stream is at 00:29:59.870

It can be seen that in this example, the play-out of the audio stream is structurally lagging behind the play-out of the video stream, i.e., there is a drift between the play-out of said streams. At the third moment in time, the play-out of the audio stream is lagging 130ms behind the play-out of the video stream. This may constitute an unacceptable level of (a)synchrony since (a lack of) lip sync becomes detectable at 130ms. In this respect, it is noted that differences in acceptability and/or detectability may exist. For example, professionals working in media processing are likely to detect lack of lip sync earlier then people with an impaired hearing and/or impaired vision. Accordingly, the threshold for lip sync detectability may in practice differ from the abovementioned 130ms. In a prior art manner of adjusting the level of synchrony, the play-out of the audio stream may have been advanced by 130ms or the video stream may have been delayed by 130ms. In accordance with an embodiment of the present invention, the time adjustment may be determined to be 175ms, thereby making use of the fact that the detectability threshold for audio being advanced with respect to video is 45ms. Accordingly, a pre-compensation of 45ms for the drift may be obtained.

Similar techniques as the above may also be applied to intra-stream synchronization. Such intra-stream synchronization is typically either clock-based or buffer-occupancy-based. If the intra-stream synchronization is clock-based, the clock of the processing device may be used to provide the play-out timing. For that purpose, the media stream may need to comprise content timestamps. If the clock of the processing device is running too fast or too slow, this may result in inaccuracies in the intra-stream synchronization. Said inaccuracies may be detected using an accurate clock. Such an accurate clock may be provided within the synchronization server, within a media stream source or another entity. The play-out timing of the processing device may be linked to clock information obtained from the accurate clock by various means, e.g., by providing a stream monitor in the media stream source which is able to associate (wall)clock timestamps from the accurate clock with content timestamps of the media stream, or by the processing device using a low-latency connection to report the play-out timing to the system and the system comprising the accurate clock. Accordingly, the system may obtain synchronization information which is indicative of the level of synchrony between play-out timing used in the play-out of the media stream and the reference timing for said play-out as obtained using the clock information. It is noted that in certain cases, the media stream may include PCR values which may serve as a clock in timing the play-out of the video stream, i.e., as the accurate clock.

If the intra-stream synchronization is buffer-occupancy-based, it may not be needed for the media stream to comprise content timestamps. Rather, if a buffer of the processing device becomes too full, i.e., if a buffer overflow occurs or is approaching, this may indicate that the play-out of the processing device is (too) slow relative to the receiving of the media stream, and vice versa. Such asynchrony may be due to a drift between the clock used in timing the play-out, e.g., a clock of the processing device, and the clock used in timing the sending of the media stream, e.g., a clock of the media stream source. Accordingly, the system may obtain the synchronization information from a comparison or otherwise linking of both clocks. Additionally or alternatively, the system may obtain the synchronization information from a level of the buffer occupancy. The level of synchrony may then be adjusted in a similar manner as described earlier, e.g., as part of the inter-destination and inter-stream synchronization.

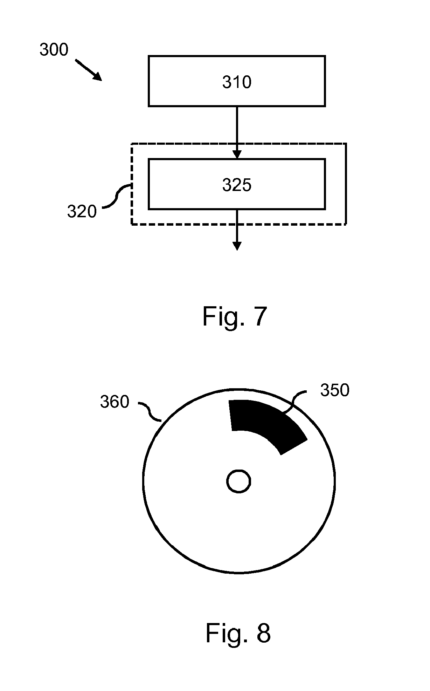

Fig. 7 shows a method 300 for providing correction information to enable adjusting a level of synchrony between a processing of a media stream and a reference processing. Here, the processing of the media stream and the reference processing are associated with a target level of synchrony. The method 300 comprises, in a first step titled "OBTAINING SYNCHRONIZATION INFORMATION", obtaining 310 synchronization information indicative of the level of synchrony between the processing of the media stream and the reference processing. The method 300 further comprises, in a second step titled "PROVIDING CORRECTION INFORMATION", providing 320 correction information indicating a time adjustment to be applied to the processing of the media stream to establish an adjusted level of synchrony between the processing of the media stream and the reference processing. Here, the second step 320 comprises, in a sub-step titled "DETERMINING TIME ADJUSTMENT TO PRE-COMPENSATE FOR DRIFT", determining 325 the time adjustment to pre-compensate for a drift between the processing of the media stream and the reference processing which will cause a deviation from the target level of synchrony over time.

It will be appreciated that a method according to the invention may be implemented in the form of a computer program which comprises instructions for causing a processor system to perform the method. The method may also be implemented in dedicated hardware, or as a combination of the above.

The computer program may be stored in a non-transitory manner on a computer readable medium. Said non-transitory storing may comprise providing a series of machine readable physical marks and/or a series of elements having different electrical, e.g., magnetic, or optical properties or values. Fig. 8 shows a computer program product comprising the computer readable medium 360 and the computer program 350 stored thereon. Examples of computer program products include memory devices, optical storage devices, integrated circuits, servers, online software, etc.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system for providing correction information to enable adjusting a level of synchrony between a processing of a media stream and a reference processing, the processing of the media stream and the reference processing being associated with a target level of synchrony, and the system comprising:
- an input for obtaining synchronization information indicative of the level of synchrony between the processing of the media stream and the reference processing;
- a processor configured for providing correction information indicating a time adjustment to be applied to the processing of the media stream to establish an adjusted level of synchrony between the processing of the media stream and the reference processing;
- wherein the processor is configured for determining the time adjustment to pre-compensate for a drift between the processing of the media stream and the reference processing which will cause a deviation from the target level of synchrony over time.

2. The system according to claim 1, wherein the reference processing is constituted by one of the group of: a further processing of the media stream, the processing of a further media stream, and clock information representing a reference timing for the processing of the media stream.

3. The system according to claim 1 or 2, wherein the processor is configured for pre-compensating for the drift by determining the time adjustment to exceed the minimal time adjustment needed to obtain the target level of synchrony.

4. The system according to any one of claims 1 to 3, wherein the processor is configured for:
- estimating a direction and/or magnitude of the drift based on the synchronization information, thereby establishing a drift estimate; and
- determining the time adjustment based on the drift estimate.

5. The system according to claim 4, wherein the synchronization information is further indicative of an earlier level of synchrony between the processing of the media stream and the reference processing, and wherein the processor is configured for establishing the drift estimate based on a difference between the level of synchrony and the earlier level of synchrony.

6. The system according to claim 5, wherein the processor is configured for establishing the drift estimate by fitting a function to data points comprising the level of synchrony and the earlier level of synchrony.

7. The system according to claim 5 or 6, wherein the synchronization information is constituted by periodic reports of a current level of synchrony between the processing of the media stream and the reference processing.

8. The system according to any one of the above claims, wherein the processing of the media stream and the reference processing is associated with a range of acceptable synchrony levels, wherein the range comprises the target level of synchrony as an intermediate point, thereby dividing the range into two sub-ranges, and wherein the processor is configured for establishing the adjusted level of synchrony in another one of the two sub-ranges than the one of the two sub-ranges which comprises the level of synchrony.

9. The system according to any one of the above claims, wherein the processor is configured for periodically providing the correction information so as to periodically compensate for the drift between the processing of the media stream and the reference processing.

10. The system according to claim 9, wherein the processor is configured for periodically providing the correction information to maintain the level of synchrony within a range of acceptable synchrony levels.

11. The system according to claim 10, wherein the processor is configured for periodically providing the correction information to allow a variation in the level of synchrony across the range of acceptable synchrony levels.

12. The system according to any one of the above claims, wherein the processing is one of the group of: a play-out, a multiplexing and a recording.

13. Media distribution network, synchronization server or synchronization client comprising the system according to any one of the above claims.

14. A method for providing correction information to enable adjusting a level of synchrony between a processing of a media stream and a reference processing, the processing of the media stream and the reference processing being associated with a target level of synchrony, and the method comprising:
- obtaining synchronization information indicative of the level of synchrony between the processing of the media stream and the reference processing;
- providing correction information indicating a time adjustment to be applied to the processing of the media stream to establish an adjusted level of synchrony between the processing of the media stream and the reference processing;
- wherein the providing of the correction information comprises determining the time adjustment to pre-compensate for a drift between the processing of the media stream and the reference processing which will cause a deviation from the target level of synchrony over time.

15. A computer program product comprising instructions for causing a processor system to perform the method according to claim 14.
